# EUROPÄISCHE PATENTANMELDUNG

(11) **EP 0 759 405 A1**
(43) Veröffentlichungstag der Anmeldung: **26.02.1997**
(21) Anmeldenummer: 96113260.2
(22) Anmeldetag: 19.08.1996
(51) Int. Cl.: B65G 37/02

(54) **Modular aufgebaute Anlage zur Durchführung von Transport, Bearbeitungs-und/oder Montagevorgängen**

(30) Priorität: 18.08.1995 DE 19530475
(71) Anmelder: PAPST LICENSING GmbH, 78549 Spaichingen (DE)
(72) Erfinder: Dietrich, Klaus, 71229 Leonberg (DE); Papst, Georg, 78549 Spaichingen (DE)
(74) Vertreter: Münich, Wilhelm, Dr.

(57) **Zusammenfassung**

Beschrieben wird eine modular (1,2;3) aufgebaute Anlage zur Durchführung von Transport, Bearbeitungs- und/oder Montagevorgängen oder dgl., mit einer Hauptförderstrekke (1,2), über die Werkstücke, Werkstückträger, Paletten und/oder Behälter für Werkstücke gefördert werden, einer Mehrzahl von Bearbeitungs- bzw. Montagestationen (3), die an der Hauptförderstrecke (1,2) angeordnet sind, und die für die Transporteinheiten jeweils eine Nebenförderstrecke aufweisen, an der jeweils wenigstens eine Station (3) angeordnet ist, die auf die Transporteinheiten einwirkt, und einer Steuereinheit (4), die u.a. das Überführen der Transporteinheiten von der Hauptförderstrecke (1,2) auf die Nebenförderstrecken (3) und umgekehrt steuert.

Die Erfindung zeichnet sich dadurch aus, daß die Anlage aus ersten (1,2) und zweiten Moduleinheiten (3) aufgebaut ist, von denen die ersten Moduleinheiten jeweils aus wenigstens einem Linearförderer (1,2) und die zweiten Moduleinheiten (3), an denen die einzelnen Stationen angeordnet sind, jeweils aus einem F rderer bestehen, der im wesentlichen U-Form hat und derart ausgebildet ist, daß er jeweils an wenigstens einer ersten Moduleinheit (1,2) ankoppelbar ist.

## Beschreibung

Die Erfindung bezieht sich auf eine modular aufgebaute Anlage zur Durchführung von Transport, Bearbeitungs- und/oder Montagevorgängen oder dgl., mit einer Hauptförderstrecke, über die Werkstücke, Werkstückträger, Paletten und/oder Behälter für Werkstücke (i.f. Transporteinheiten) gefördert werden, einer Mehrzahl von Bearbeitungs- bzw. Montagestationen, die an der Hauptförderstrecke angeordnet sind, und die für die Transporteinheiten jeweils eine Nebenförderstrecke aufweisen, an der jeweils wenigstens eine Station angeordnet ist, die auf die Transporteinheiten einwirkt, und einer Steuereinheit, die u.a. das Überführen der Transporteinheiten von der Hauptförderstrecke auf die Nebenförderstrecken und umgekehrt steuert.

Ein gattungsbildender Stand der Technik ist aus der EP-C-0 115 357 bekannt, in der eine veränderbare Anlage zur Durchführung einer Vielzahl von Arbeitsgängen der Montage und/oder Bearbeitung von sich auf umlaufenden Paletten befindlichen Teilen beschrieben ist. Hierbei werden die Paletten einzeln entlang gerader, parallel und/oder rechtwinklich zueinander Bahnabschnitte fortbewegt, wobei die Bahnabschnitte aus einer Vielzahl von in Längsrichtung nebeneinander aufgereihter Module gleicher Länge bestehen. Ein wesentlicher Aspekt des Gegenstandes in der obengenannten europäischen Patentschrift ist die Kombination des Moduls mit einem in Längsrichtung verlaufenden Hauptumlaufbahnabschnitt. Durch die Kombination der einzelnen Module mit jeweiligen Bahnabschnitten, die der Hauptumlaufbahn entsprechen, ist jedoch die Variabilität und Flexibilität des Einsatzmöglichkeiten einzelner Module insofern eingeschränkt, als sie ständig an dem Hauptumlaufbahnabschnitt gekoppelt sein müssen.

Erfindungsgemäß ist erkannt worden, daß es - um die Modularität derartiger Transportsysteme zu optimieren - von Vorteil ist, individuelle Moduleinheiten nach einem Baukastenprinzip derart zu kombinieren, daß das vorstehende Erfodernis, die Kombination mit dem Hauptumlaufbahnabschnitt, nicht erfüllt sein muß.

Es ist daher Aufgabe der Erfindung, eine modular aufgebaute Anlage zur Durchführung von Transport, Bearbeitungs- und/oder Montagevorgängen derart weiterzubilden, daß die Anlage aus modularen Einzelteilen zusammensetzbar ist, die nicht alle zugleich am Hauptförderstrang unmittelbar angekoppelt sein müssen. Die Anlage sollte insbesondere aufgrund erhöhter Modularität möglichst allen individuellen Transportbedürfnissen gerecht werden.

Die Lösung der der Erfindung zugrunde liegenden Aufgabe ist im Patentanspruch 1 angegeben.

Der Erfindung liegt die Idee zugrunde, eine gattungsgemäße Anlage, die eine Hauptförderstrecke, eine Mehrzahl von Bearbeitungs- bzw. Montagestationen sowie eine Steuereinheit aufweist, derart weiterzubilden, daß die Anlage aus ersten und zweiten Modulen aufgebaut ist, von denen die ersten Moduleinheiten jeweils aus wenigstens einem Linearförderer und die zweiten Moduleinheiten, an denen die einzelnen Stationen angeordnet sind, jeweils aus einem Förderer bestehen, der im wesentlichen U-Form aufweist und der derart ausgebildet ist, daß er jeweils an wenigstens einer ersten Moduleinheit ankoppelbar ist.

Die mittels der modular aufgebauten Anlage zur Durchführung von Transport, Bearbeitungs- und/oder Montagevorgängen geförderten Werkstücke bzw. Werkstückträger, Paletten und/oder Behälter werden auf einer Hauptförderstrecke gefördert. Entlang der Hauptförderstrecke sind eine Mehrzahl von Bearbeitungs-bzw. Montagestationen angeordnet, die für die Transporteinheiten jeweils eine Nebenförderstrecke aufweisen, an der jeweils wenigstens eine Station angeordnet ist, die auf die Transporteinheiten einwirkt. Eine Steuereinheit steuert u.a. das Überführen der Transporteinheiten von der Hauptförderstrecke auf die Nebenförderstrecke und umgekehrt.

Durch die erfindungsgemäße Ausbildung der ersten und zweiten Moduleinheiten, ist eine große Vielzahl unterschiedlicher Förderstreckenverläufe konstruierbar.

So ist in der einfachsten Ausbildung eine durchgehende Hauptförderstrecke durch die Verbindung von mehreren ersten Moduleinheiten an ihren jeweiligen Schmalseiten zu erhalten.

Um die auf der Hauptförderstrecke zu transportierenden Werkstücke vom Hauptförderstrang zu einem konkreten Arbeitsplatz ableiten zu können, sind vorzugsweise die ersten Moduleinheiten zentral angeordnet, während die zweiten Moduleinheiten an den Längseiten der ersten Moduleinheiten angebracht sind.

Vorzugsweise sind für einen Transportfluß in zwei Richtungen die ersten Moduleinheiten mit zwei gegenläufigen Linearförderern ausgestattet.

Um beispielsweise einen geschlossenen Werkstückträgerfluß zu erhalten, sind vorzugsweise die ersten Moduleinheiten derart angeordnet, daß ihre Linearförderer Bestandteil einer geschlossenen Hauptförderstrecke sind.

An den Endstücken der jeweiligen Linearförderer mit gegenläufiger Transportrichtung sind Verbindungs-module angeordnet, die aus den zweiten Moduleinheiten bestehen. So kann über die U-förmige Gestalt der zweiten Moduleinheit die Transporteinheit von der einen Transportrichtung in die gegenläufige Transportrichtung überführt werden.

Eine alternative Kombinationsmöglichkeit besteht darin, die ersten Moduleinheiten beabstandet voneinander anzuordnen und zwischen den ersten Moduleinheiten zweite Moduleinheiten vorzusehen, so daß die Übergabe der Transporteinheit in den Innenraum der durch die ersten Moduleinheiten begrenzten Fläche möglich ist. Auf diese Weise kann eine sehr kompakte Anlagenstruktur erhalten werden.

Ferner weisen die zweiten Moduleinheiten in vorteilhafter Weise sog. Schleusungselemente auf, die zum Ein- bzw. Ausschleusen der Transporteinheit dienen und welche derart ansteuerbar sind, so daß bei entsprechender Verbindung mit den ersten Moduleinheiten in die Laufbahn der Linearförderer der ersten Moduleinheiten eingegriffen werden kann.

Zur Steigerung der Integrationsfähigkeit der zwei erfindungsgemäß vorgesehenen Moduleinheiten erstrecken sich die Linearförderer nicht über die gesamte Länge der jeweiligen ersten Moduleinheiten, so daß die Endstücke der Nebenförderstrecke der zweiten Moduleinheit die Linearförderer der ersten Moduleinheit umgreifen können. Auf diese Weise sind geschlossene Förderstrekken auf engstem Raum realisierbar.

Um die Übergabe der Transporteinheiten von der ersten zur zweiten Moduleinheit und umgekehrt zu ermöglichen, sind die Endstücke der Nebenförderstrecken als Teller, vorzugsweise als Drehhubteller ausgebildet, auf denen gesondert antreibbare Förderelemente angeordnet sind.

Ferner ist es möglich, die zweiten Moduleinheiten derart miteinander zu kombinieren, daß an einer Ausschleusestelle auf dem Förderweg der ersten Moduleinheit die Transporteinheit wahlweise in die eine oder andere Nebenförderstrecke einer zweiten Moduleinheit überführt werden kann.

Die Variationsmöglichkeiten der erfindungsgemäß modular aufgebauten Förderanlage kann in einfacher Weise dadurch gesteigert werden, daß die ersten und/oder zweiten Moduleinheiten unterschiedliche Länge aufweisen. Damit bricht die Erfindung insbesondere von dem aus der EP-C-0 115 357 bekannten Prinzip.

Vorzugsweise können als Förderelemente der Hauptförderstrecke und der Nebenförderstrecken an sich bekannte Riemenförderer, Kettenförderer sowie Kombinationen aus Verkettungssystemen und Gewindespindeln verwendet werden. Um die Transportmöglichkeit in beiden Richtungen zu gewährleisten, sind Riemenförderer mit jeweils zwei Riemen vorgesehen. Vorzugsweise sind die Riemen als Ketten ausgebildet, in deren Außenseite Kunststoffelemente eingesetzt sind.

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a - d: Kombinationsmöglichkeiten der erfindungsgemäßen, modular aufgebauten Transportanlage sowie,
- Fig. 2: Einzelelemente der erfindungsgemäß angegebenen modular aufgebauten Transportanlage.

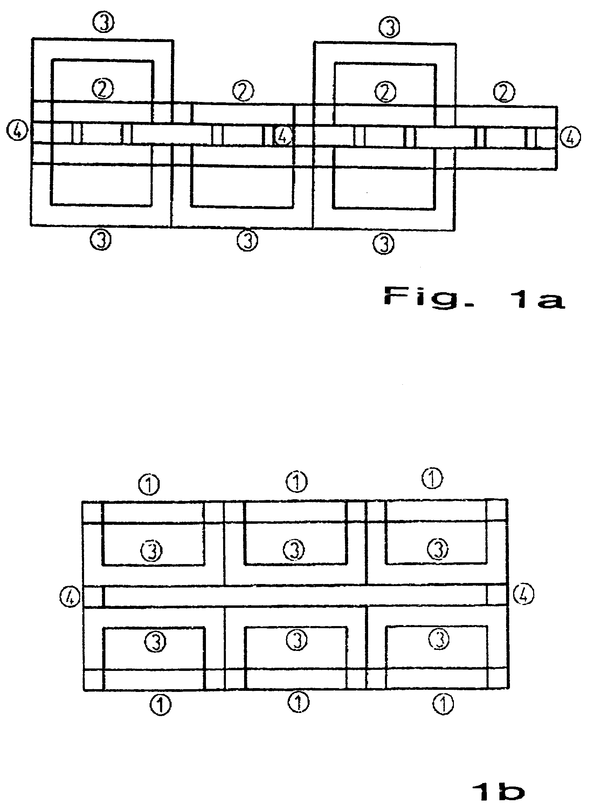

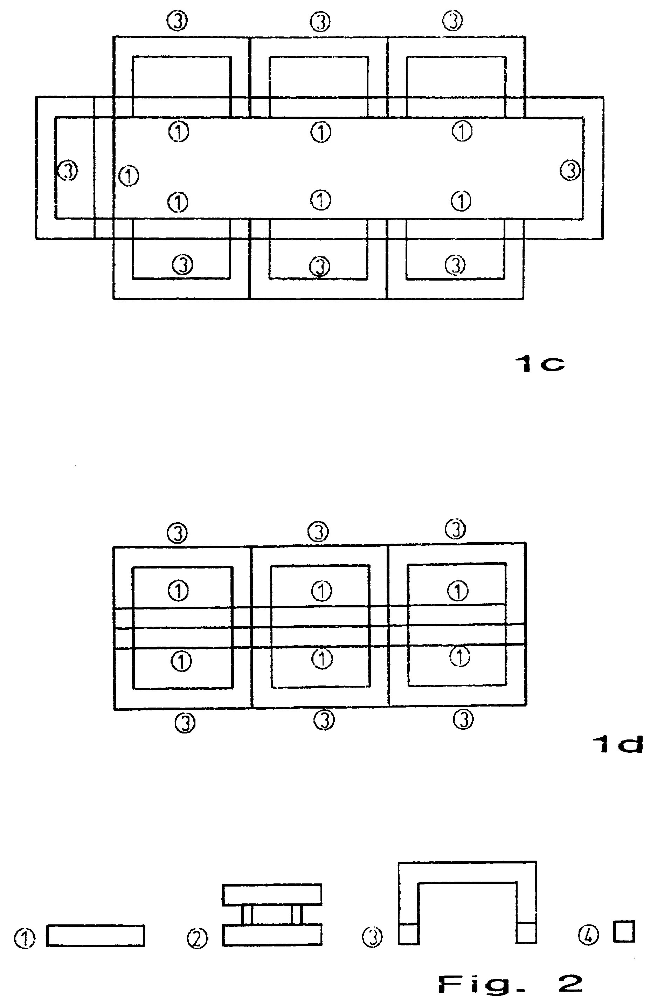

Bei dem in Fig. 1a dargestellten Ausführungsbeispiel ist ein zentraler Hauptförderstrang vorgesehen, der aus Hauptförderkreiselementen 2 besteht, die insbesondere gemäß Fig. 2 aufgebaut sein können.

Die Hauptförderkreiselemente 2 bestehen aus zwei ersten Moduleinheiten, deren jeweilige Linearförderstrecken miteinander über Elemente 4 verbunden sind, so daß Transporteinheiten von der einen Linearförderstrecke zur anderen Linearförderstrecke gelangen können. Die sich zwei parallel gegenüberliegenden Linearförderstrecken innerhalb eines Hauptförderkreiselementes 2 weisen gegenläufige Transportrichtungen auf, so daß ein in sich geschlossener Transportkreislauf gewährleistet ist.

Mit den Linearförderelementen der jeweiligen Hauptförderkreiselemente 2 sind Arbeitselemente bzw. Puffer- oder Verbindungselemente 3 (siehe wiederum Figur 2) vorgesehen, die U-förmige Gestalt aufweisen und den zweiten Moduleinheiten entsprechen. An den Enden der U-förmigen Moduleinheiten sind Drehteller bzw. Drehhubteller angeordnet, so daß über diese Schleusungselemente die auf dem Hauptförderstrang befindlichen Transporteinheiten auf die entsprechenden Nebenförderstrecken ausgeschleust werden können.

Eine weitere Kombinationsmöglichkeit der erfindungsgemäßen, modularen Anlage, die den Vorteil eines noch kompakteren Aufbaus hat, ist aus Fig. 1b zu entnehmen: Hierbei sind die zweiten Moduleinheiten bzw. Arbeitselemente 3 reihenhaft nebeneinander angeordnet und jeweils über lineare Verbindungsstrecken 1 miteinander verbunden. Um eine Übergabe der Transporteinheiten, die sich beispielsweise innerhalb der oberen Zeile der zweiten Moduleinheiten befinden zu der unteren, nebeneinander angeordneten Arbeitselementzeile 3 zu ermöglichen, sind Verbindungselemente 4 vorgesehen, die bereits erwähnt, Drehhubteller sein können.

Die Fig. 1c und 1d zeigen Abwandlungen der in Fig. 1a und 1b dargestellten Ausführungsformen:

In Fig. 1c sind die Moduleinheiten 1 zu einem Karee angeordnet, bei dem sich auch an den Stirnseiten Arbeitselemente bzw. Verbindungselemente 3 befinden.

Bei der Ausführungsform gemäß Fig. 4 wird auf die Verbindungselemente 4 verzichtet. Die Verbindung wird vielmehr durch die Elemente 3 hergestellt. Ansonsten entspricht dieses Beispiel in etwa dem in Fig. 1a dargestellten Beispiel.

Im übrigen wird zu den Kombinationsmöglichkeiten der erfindungsgemäßen modular aufgebauten Anlage auf die Zeichnung und die nachfolgenden Ansprüche verwiesen.

## Patentansprüche

1. Modular aufgebaute Anlage zur Durchführung von Transport, Bearbeitungs- und/oder Montagevorgängen oder dgl., mit
- einer Hauptförderstrecke, über die Werkstücke, Werkstückträger, Paletten und/oder Behälter für Werkstücke (i.f. Transporteinheiten) gefördert werden,
- einer Mehrzahl von Bearbeitungs- bzw. Montagestationen, die an der Hauptförderstrecke angeordnet sind, und die für die Transporteinheiten jeweils eine Nebenförderstrecke aufweisen, an der jeweils wenigstens eine Station angeordnet ist, die auf die Transporteinheiten einwirkt, und
- einer Steuereinheit, die u.a. das Überführen der Transporteinheiten von der Hauptförderstrecke auf die Nebenförderstrecken und umgekehrt steuert,
dadurch **gekennzeichnet**, daß die Anlage aus ersten und zweiten Moduleinheiten aufgebaut ist, von denen
- die ersten Moduleinheiten jeweils aus wenigstens einem Linearförderer und
- die zweiten Moduleinheiten, an denen die einzelnen Stationen angeordnet sind, jeweils aus einem Förderer bestehen, der im wesentlichen U-Form hat und derart ausgebildet ist, daß er jeweils an wenigstens einer ersten Moduleinheit ankoppelbar ist.

2. Anlage nach Anspruch 1,
dadurch **gekennzeichnet**, daß zur Bildung einer durchgehenden Hauptförderstrecke diese aus ersten Moduleinheiten aufgebaut ist, die an ihren Schmalseiten verbunden sind.

3. Anlage nach Anspruch 2,
dadurch **gekennzeichnet**, daß die ersten Moduleinheiten zentral angeordnet sind, und
daß an den außen liegenden Längsseiten der ersten Moduleinheiten die zweiten Moduleinheiten angebracht sind.

4. Anlage nach Anspruch 3,
dadurch **gekennzeichnet**, daß jede erste Moduleinheit zwei gegenläufige Linearförderer aufweist.

5. Anlage nach einem der Ansprüche 1 bis 4,
dadurch **gekennzeichnet**, daß die ersten Moduleinheiten derart angeordnet sind, daß ihre Linearförderer Bestandteil einer geschlossenen Hauptförderstrecke sind, und daß die Endstücke der Linearförderer mit gegenläufiger Transportrichtung der ersten Moduleinheiten durch ein Verbindungsmodul miteinander verbunden sind.

6. Anlage nach Anspruch 5,
dadurch **gekennzeichnet**, daß zweite Moduleinheiten die Verbindungsmodule bilden.

7. Anlage nach Anspruch 5,
dadurch **gekennzeichnet**, daß wenigstens ein Teil der ersten Moduleinheiten mindestens eine Verbindungsstrekke aufweist, die die gegenläufigen Linearförderer der Hauptförderstrecke derart verbindet, daß Transporteinheiten von der einen Transportrichtung in die gegenläufige Transportrichtung überführbar sind.

8. Anlage nach Anspruch 1,
dadurch **gekennzeichnet**, daß die ersten Moduleinheiten beabstandet voneinander und die zweiten Moduleinheiten zwischen den ersten Moduleinheiten angeordnet sind.

9. Anlage nach einem der Ansprüche 1 bis 8,
dadurch **gekennzeichnet**, daß sich der Linearförderer über die gesamte Länge der jeweiligen ersten Moduleinheiten erstreckt, und
daß die zweiten Moduleinheiten Schleusungselemente aufweisen, die zum Ein- bzw. Ausschleusen der Transporteinheiten steuerbar in die Linearförderer der ersten Moduleinheiten greifen.

10. Anlage nach einem der Ansprüche 1 bis 9,
dadurch **gekennzeichnet**, daß sich der Linearförderer nicht über die gesamte Länge der jeweiligen ersten Moduleinheiten erstreckt, und
daß die Endstücke der Nebenförderstrecken der zweiten Moduleinheiten die Linearförder umgreifen.

11. Anlage nach Anspruch 10,
dadurch **gekennzeichnet**, daß die Endstücke der Nebenförderstrecken Drehteller und insbesondere Drehhubteller sind, auf denen gesondert antreibbare Förderelemente angeordnet sind.

12. Anlage nach einem der Ansprüche 1 bis 11,
dadurch **gekennzeichnet**, daß an den zweiten Moduleinheiten weitere zweite Moduleinheiten derart anbringbar sind, daß der Werkstückträger, der auf die Nebenförderstrecke der an der jeweiligen ersten Moduleinheit angebrachten Moduleinheit ausgeschleust worden ist, wahlweise in der Bearbeitungs- bzw. Montagestation dieser Moduleinheit bearbeitet oder auf die Nebenförderstrecke der an dieser Moduleinheit angebrachten (weiteren) zweiten Moduleinheit überführt werden kann.

13. Anlage nach einem der Ansprüche 1 bis 12,
dadurch **gekennzeichnet**, daß die ersten und/oder zweiten Moduleinheiten unterschiedliche Länge haben.

14. Anlage nach einem der Ansprüche 1 bis 13,
dadurch **gekennzeichnet**, daß die Förderelemente der Hauptförderstrecke und der Nebenförderstrecken Riemenförderer, Kettenförderer, Kombinationen aus Verkettungssystemen und Gewindespindeln oder dlg. sind.

15. Anlage nach Anspruch 14,
dadurch **gekennzeichnet**, daß jeder Riemenförderer zwei Riemen aufweist.

16. Anlage nach Anspruch 14 oder 15,
dadurch **gekennzeichnet** daß eine Kette, in deren Außenseite Kunststoffelemente eingesetzt sind, den Riemen bildet.
